# EUROPEAN PATENT APPLICATION

(11) **EP 2 026 043 A2**
(43) Date of publication of application: **18.02.2009**
(21) Application number: 08161221.0
(22) Date of filing: 25.07.2008
(51) Int. Cl.: G01F 3/10, G01F 15/00, F04C 2/08

(54) **Fluid flow modulation and measurement**

(30) Priority: 31.07.2007 US 831589
(71) Applicant: Dresser, Inc., Addison, Texas 75001 (US)
(72) Inventor: Watson, David B., Waukesha, TX 53188 (US); Gurierrez, Francisco M., League City, TX 77573-0898 (US)
(74) Representative: Peterreins, Frank

(57) **Abstract**

In fluid flow measurement applications, apparatus and associated systems, computer program products, and methods may include a positive displacement fluid flow meter (110) having an actuator (135; 410; 455) to control fluid flow through the meter, and further having two or more rotating members (130; 205, 210; 255, 260) with substantially parallel axes that rotate in response to the actuator and to fluid flow through the meter (110). In various implementations, the actuator (135; 410; 455) may promote and/or retard a fluid flow being measured through the meter. In some examples, the fluid flow meter may operate as a pump to controllably increase a line pressure, controllably regulate a fluid flow rate by opposing rotation of the rotating members, substantially stop a fluid flow, and/or reverse a base fluid flow direction.

In an illustrative example, the meter may operate to accurately monitor and control fluid flow (e.g., fluid pressure, velocity, and/or volume) before, during, and/or after a line break.

## Description

### TECHNICAL FIELD

Various embodiments relate to modulating fluid flow in fluid flow measurement systems.

### BACKGROUND

Fluids, which may be in liquid or gas state, are often transported, distributed, and/or sold to customers through a system of transmission and distribution lines. For purposes such as billing and inventory control, for example, fluid flow measurement systems may be installed at various locations along these lines. Gas metering systems, for example, may measure the volume of gas that flows through a particular gas line. Some fluid measurement systems include a fluid flow meter and an electronic or mechanical indicator or index.

Various designs may be used to measure fluid flows. For example, some meter designs include a turbine or venturi tube to sense fluid flow. Some meter designs may operate as positive displacement meters. In some positive displacement meters, for example, a single rotation of a set of impellers may correspond to displacement of a substantially controlled volume of a fluid between an inlet and an outlet of the rotary meter. For compressible fluids, such as gasses, the volume of fluid displaced by each rotation of the impellers may be a function of factors such as pressure and temperature, viscosity, and/or turbulence, for example.

As an illustrative example, a positive displacement rotary fluid flow meter may be configured to measure the volume of gas passing through a gas line. Gas flowing through the gas line may cause the impellers to rotate. Each impeller rotation may produce an electrical or mechanical output signal responsive to actual flow.

In some applications in which temperature and/or pressure conditions may vary significantly, the output signal may be supplied to a correction module that produces a gas volume measurement signal that has been corrected for pressure and/or temperature conditions. In some examples, such a corrector module may operate to account for the effects associated with Boyle's Law and/or Charles' Law. In natural gas applications, for example, buying and selling of natural gas may typically involve correcting the output signal from the meter to improve fluid flow measurement accuracy with respect to a standard volume of natural gas.

### SUMMARY

In fluid flow measurement applications, apparatus and associated systems, computer program products, and methods may include a positive displacement fluid flow meter having an actuator to control fluid flow through the meter, and further having two or more rotating members with substantially parallel axes that rotate in response to the actuator and to fluid flow through the meter. In various implementations, the actuator may promote and/or retard a fluid flow being measured through the meter. In some examples, the fluid flow meter may operate as a pump to controllably increase a line pressure, controllably regulate a fluid flow rate by opposing rotation of the rotating members, substantially stop a fluid flow, and/or reverse a base fluid flow direction. In an illustrative example, the meter may operate to accurately monitor and control fluid flow (e.g., fluid pressure, velocity, and/or volume) before, during, and/or after a line break.

In some embodiments, the actuator may controllably adjust a pressure of the fluid at an inlet port of the meter and/or at an outlet port of the meter, and/or it may controllably adjust a volume, flow rate, and/or flow direction through the meter. The actuator may oppose rotation of one or more of the rotating members such that fluid flow reduces to substantially near zero. The rotating members may substantially freewheel in response to a fluid flow until the actuator applies a torque to at least one of the rotating members.

Some embodiments may have one or more advantages. For example, some embodiments may detect and react to a line break or leak condition such that fluid leakage or contamination may be substantially reduced. Some embodiments may respond to leak conditions (e.g., changes in flow rates, fluid pressure levels) automatically, in cooperation with other local fluid flow control elements (e.g., valves, pumps, sensors, and the like), and/or in communication with an external control system or operator. In response to detecting of upstream and/or downstream leak conditions, the actuator in various embodiments may act, for example, to substantially reduce the pressure and/or volume of fluid in the line with the leak. Furthermore, some embodiments may be configured to actively and/or passively detect, measure, characterize, and/or attenuate (e.g., such as by damping) fluid line dynamics (e.g., fluid pressure disturbances associated with changes in load and/or supply conditions, such as the opening of a high pressure valve). In some applications, various embodiments may supplement, control, cooperate with, and/or replace one or more other fluid flow control apparatus, thereby improving controllability and/or reducing system component count, complexity, and associated installation, maintenance, and operational expenses. In some applications, an accurate flow meter with fluid flow control capability may substantially reduce overall system cost, and/or improve system fault tolerance and/or recovery for a substantially low incremental cost. Furthermore, some embodiments may provide monitoring and reporting capabilities that may reduce unnecessary maintenance-related labor and materials expenses, help to identify existing and/or potential points of failure, and/or promote increased system availability and/or reliability.

The details of one or more embodiments are set forth in the accompanying drawings and the description below. Other features, objects, and advantages will be apparent from the description and drawings, and from the claims.

### DESCRIPTION OF DRAWINGS

FIG. 1 shows a block diagram of an exemplary fluid flow metering and control system.

FIGS. 2A and 2B show two exemplary configurations of positive displacement meters.

FIG. 3 shows a plot of exemplary fluid flow operating points with respect to fluid flow through a positive displacement chamber.

FIGS. 4A and 4B show two exemplary configurations for a barrier that separates a magnetically coupled impeller and an actuator in a fluid flow metering and control system.

FIGS. 5A-5C show three exemplary configurations of friction brakes in a fluid flow metering and control system.

### DETAILED DESCRIPTION OF ILLUSTRATIVE EXAMPLES

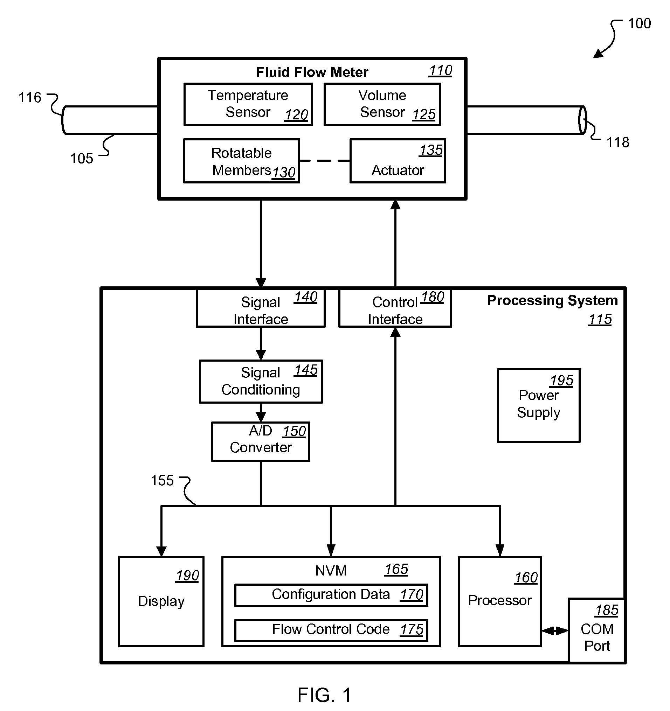

FIG. 1 shows an exemplary fluid flow measurement and control system 100 that includes a fluid flow line 105, a fluid flow meter 110, and a processing system 115. In this example, fluid, which may be in gas or liquid form, may flow in either direction between a first port 116 and a second port 118. The volume of fluid that flows through the fluid line 105 is measured by the fluid flow meter 110, which may be a gas flow meter or a liquid flow meter, for example. The measured data is processed by the processing system 115, which may include a fluid flow accumulator, totalizer, corrector, or similar fluid flow measurement processing device. The fluid flow meter 110 includes an actuator 135 coupled to the rotary member 135. In response to a control signal, the actuator 135 may act on the rotary member 135 to promote or resist fluid flow through the meter 110. In various examples, the actuator 135 may operate to increase a base fluid flow rate (e.g., the natural rate of fluid flow in a fluid line 105), substantially decrease the base fluid flow rate, substantially stop the fluid flow, and/or reverse a base fluid flow direction. In response to the control signal, the actuator may operate to controllably adjust and/or regulate fluid pressures (e.g., at the first port 116 and/or the second port 118), differential pressure (e.g., across the meter), dispensed volumes, and/or flow rates through the meter 110.

In some embodiments, the fluid flow meter 110 may be controlled by various external electrical inputs (e.g., signals from the processing system 115, signals from one or more external sensors, a command from a wired or wireless data terminal) and/or mechanical inputs (e.g., dials, adjustment screws, levers, knobs, pneumatic signals, hydraulic signals). In some implementations, the fluid line 105 can be a gas line that transports gasses (e.g., such as natural gas, argon, butane, carbon monoxide, carbon dioxide, methane, nitrogen, oxygen, propane, air). In other implementations, the fluid line 105 can be a line that transports liquids (e.g., water, crude oil, petroleum, gasoline, molasses, honey, chemical solutions, wastewater). In yet other embodiments, the fluid line 105 can be a line that transports slurries or flowable solids (e.g., powders, mashed potatoes).

In the depicted example, the fluid flow meter 110 includes a temperature sensor 120, a volume sensor 125, and a set of positive displacement rotating members 130 (e.g., as in a Roots blower, gear pump, chain pump, and the like) that is coupled to a controllable actuator 135. The fluid flow meter 110 measures fluid flow information, such as velocity, volume, pressure, and/or temperature in the fluid line 105. When fluid flows through the fluid flow meter 110, the fluid flow causes the rotating members 130 to rotate at a rate that is substantially proportional to the rate of fluid flow in the fluid line 105. In some embodiments, the rotary motion of the rotating members 130 may be measured to detect a rate of fluid flow. The fluid flow meter 110 communicates the measured information to the processing system 115. The processing system 115 receives the signals via a signal interface 140 (which may include electrical and/or mechanical inputs) to determine a quantity of fluid, such as a volume of gas, flowing through the fluid flow meter 110. For example, the processing system 115 may use the temperature information from the temperature sensor 120 to convert actual gas volume to standard gas volume based on Charles' Law.

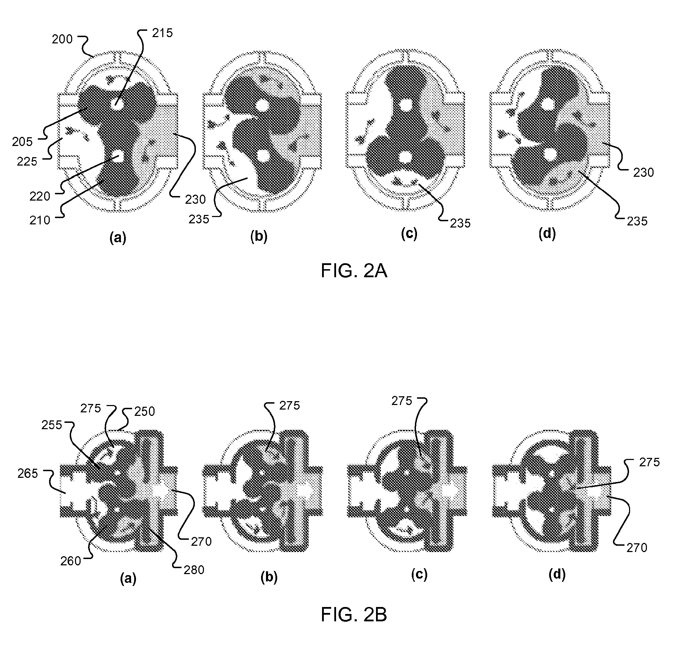

In some examples, the fluid flow meter 115 may measure the volume of the fluid flow using rotating impellers (e.g., rotating members 130). Examples of rotating impellers are described with reference to FIG. 2.

According to the example depicted in FIG. 1, the controllable actuator 135 may convert mechanical energy from the fluid flow into another form of mechanical energy (e.g., spinning of a flywheel or governor, compressing a spring) or other forms of energy (e.g., heat from friction or pressurization, electricity, pneumatic, hydraulic). In some embodiments, the controllable actuator 135 may produce electricity to power the processing system 120, either alone or in combination with power supplied by other sources, such as a battery, solar panel, a power supply 195, or a combination of these or other power sources. Some examples of a generator are described in U.S. Patent 6,886,414 to Gutierrez et al., entitled "Power Generating Meter," which issued on May 3, 2005, the entire contents of which are incorporated herein by reference.

The received signals, such as the line pressure, the temperature, the flow rate, and the volume signals, are processed by a signal conditioning circuit 145 and an A/D (analog to digital) converter 150. The signal conditioning circuit 145 may include analog amplification and/or scaling to modify the input signal for interfacing to the A/D converter 150. As shown, the A/D converter 150 processes analog signals from the signal conditioning circuit 145. In some embodiments, the A/D 150 may receive signals from the fluid flow meter 110. For example, the A/D converter 150 may receive an encoded output signal from the controllable actuator 135. The A/D converter 150 outputs a serial or parallel data signal representing samples of the input signal(s) onto a digital bus 155.

The bus 155 couples to a processor 160 and a non-volatile memory (NVM) 165. The processor 160 may include one or more processing devices that are operable to perform processing in hardware, execute instructions (e.g., software, firmware), or perform operations using a combination of hardware and executed instructions. Operations may be performed in hardware, for example, using any combination of analog (e.g., linear, non-linear) or digital (e.g., synchronous, asynchronous, state machine, and the like) components, which may include, but are not limited to, discrete, integrated, hybrid, ASIC, FPGA, and/or combinations of these or similar processing hardware components. For example, the processor 160 may include, by way of example and not limitation, a microcontroller, microprocessor, DSP, ASIC, FPGA, and/or math co-processor. The NVM 165 may store program, control, data, metadata, and/or other information for access by the processor 160. For example, the processor 160 may access information stored in the NVM 165 such as configuration data 170. In some embodiments, the processor 160 may look up configuration data 170 to select fluid flow rate settings and/or calibration settings that may be used for a given set of environmental conditions (for example, to compute a flow rate for various temperature, pressure, and/or volume conditions).

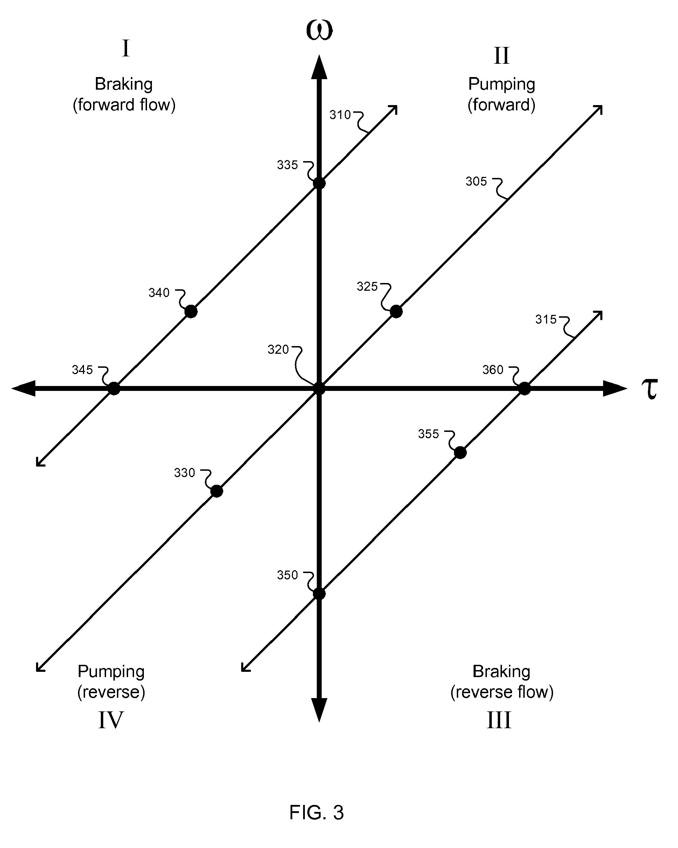

In the depicted example, the NVM 165 also stores a set of program instructions, including flow control code 175. The processor 160 may execute the flow control code 175 to configure a control interface 180 for fluid flow control operations. In the depicted embodiments, the control interface 180 is configured to send a control signal to the controllable actuator 135 to control the rate of rotation of the positive displacement rotating member 130. Examples of fluid flow control operations are described in further detail with reference to FIG. 3.

In some embodiments, the program instructions may configure the processing system 115 to operate in an independent manner. For example, the processing system 115 may be configured to maintain a constant flow rate and/or pressure at the outlet of the fluid flow line 105 by commanding the controllable actuator to rotate the rotating member 130 at a substantially constant rate. In another example, the processing system 115 may be configured to leave a base flow rate substantially unchanged until certain fluid flow conditions are encountered. For example, if the processing system 115 detects a high rate of flow and a low fluid line outlet pressure which both violate pre-programmed thresholds, a command may be sent to the controllable actuator that may cause the rotating member 130 to stop rotating. In some implementations, stopping the rotation of the rotating member 130 may effectively stop the fluid flow.

In some embodiments, the NVM 165 may store a system characterization code. For example, the processor 160 may execute a system characterization code to monitor and/or store a collection of characteristic data that occurs during various combinations of parameters (e.g., flows, temperatures, pressures, volumes, times, dates). The processor 165 may use the stored characteristic data to form a mathematical and/or statistical model of typical flow rates that may be seen under various combinations of parameters. The processor 165 may use the model of typical flow rates to autonomously operate to detect an atypical flow rate, and automatically respond by commanding the controllable actuator 135 to rotate the rotating member 130 to boost, reduce, stop, and/or reverse the fluid flow.

In some implementations, the processor 160 may use the collection of characterization data to detect a periodic surge in fluid flow and/or pressure. For example, the fluid line 105 and other devices attached to it may cause the fluid pressure to resonate. In some implementations, the processing system 115 may control the fluid flow meter to actively counteract (e.g., dampen, absorb) a periodic surge in fluid pressure and/or flow. For example, if the processing system 115 detects a periodic surge of pressure at the first port 116, the processing system 115 may control fluid flow meter 110 to dampen the periodic pressure at the first port 116 by modulating torque on the rotating members 130 so as to allow fluid to flow to increase during pressure peaks and to increase resistance to fluid flow during pressure drops. In some examples, such control may be implemented using negative feedback, feedforward techniques, fuzzy logic, open loop, or a combination of these or other analog and/or digital control techniques.

The processing system 115 also includes a COM port 185. In some implementations, the COM port 185 may provide one or two-way communication links (e.g., receive only, transmit only, transmit or receive, full duplex, etc...) with one or more other devices. For example, the COM port 185 may be used to link to a download terminal of a laptop or a handheld computer to send collected measurement and/or maintenance request signals. In another example, an external device may send instructions, such as a check fluid flow status instruction, to the processing system 115 via the COM port 185. Upon receiving the check fluid flow status instruction, the processor 160 may perform the check fluid flow instruction to check the status the controllable actuator 135. Then the processor 160 can send the result to the device using the COM port 185. In some embodiments, the COM port 185 may communicate with the external device using a wireless interface, such as a wireless network interface card (WNIC), to connect to a radio based network or an Infrared (I/R) interface. In various embodiments, the COM port 185 may connect to the external device via a Universal Serial Bus (USB) interface, Bluetooth, or by other standard or proprietary protocols and links, for example.

The NVM 165, in some embodiments, may contain program instructions to configure the fluid flow monitoring and control system 100 to operate in response to an external command. In some embodiments, the external command may be given by a user interacting with a user interface included as part of the fluid flow monitoring and control system 100, or delivered from an external device connected to the COM port 185. The external command may allow a user or external device to cause the fluid flow monitoring and control system 100 to increase, decrease, stop, and/or reverse the rate of flow through the fluid line 105. For example, a remotely located control station may control the opening and/or closing of various valves in the fluid line 105. The act of opening and/or closing the valves may cause pressure drops, surges, and/or shockwaves (e.g., a "water hammer" effect) in the fluid flowing through the fluid line 105. The control station may attempt to dampen the effects of opening and/or closing the values by remotely altering the behavior of the fluid flow monitoring and control system 100. For example, the control station may open a valve, which may cause a pressure surge in the fluid line 105. The control station may prepare for this situation and dampen the pressure surge by configuring the fluid flow monitoring and control system 100 to partially resist the pressure surge. In another example, the control station may need to close a valve, which may be either upstream or down stream, in the fluid line 105. The act of closing a valve in a fluid flow line (e.g., the fluid line 105) may cause a shockwave (e.g., a "water hammer") in the fluid. The control station may attempt to minimize the shockwave by commanding the fluid flow control and monitoring system 100 to progressively slow the flow rate in the fluid line 105 to a stop, and then close the valve in the substantially static fluid flow. By way of example, and not limitation, some implementations may advantageously monitor direction, velocity, acceleration, and/or rate of acceleration of the fluid flow through the meter, and may use such monitored information to substantially limit a time-rate of change of any of monitored variable, and/or substantially regulate any such monitored variable to a set-point value, or within certain limits, which may be predetermined and/or dynamically determined.

In some embodiments, the fluid flow monitoring and control system 100 may be used as a safety device. For example, in an unoccupied building there may be no one present to detect a water leak, a gas leak, or other such leak that may cause damage if left undetected. A utility company or property owner may configure the fluid flow monitoring and control system 100 to stop the flow of fluid (e.g., water, gas, steam) to an unoccupied building as a precaution against a line break. In another example, fire fighters may be equipped with a wireless transmitter that may command fluid flow monitoring and control systems (e.g., the fluid flow monitoring and control system 100) to cut off natural gas supplies in the event of a leak or fire. For example, upon arrival at a fire call, fire personnel may cut a supply of fuel for the fire and/or reduce the risk of a gas explosion by using the wireless transmitter to send a signal that may cut off the supply of natural gas to the burning building and/or other buildings in the surrounding vicinity.

The processing system 115 also includes a display 190, such as a liquid crystal display (LCD) monitor, a thin-film transistor (TFT) monitor, arrangement of one or more single or multi-color LEDs (light emitting diodes) or an LED screen. The processor 160 may transmit text messages and/or graphical messages to the display 190. For example, when the fluid flow meter is measuring and/or controlling some aspect (e.g., flow rate, direction, acceleration, and the like) of a fluid flow, the processor 160 may display a message on the display 190 to indicate a base fluid flow rate, and/or to indicate a controlled fluid flow rate and/or pressure.

The processing system 115 further includes the power supply 195 to supply, for example, regulated voltage for operation of the processor 160. The power supply 195 may include one or more voltage regulators, for example, to supply operating power to various circuits around one or more voltages that may include, but are not limited to, 1.5 V, 3.0 V, 3.3 V, +/- 5V, +/- 10V, and 20V Examples of voltage regulators may include, for example, linear, low dropout, switched-mode (e.g., buck, boost, buck-boost, SEPIC, CUK, flyback, forward), switched-capacitor type supplies, or series or parallel combinations thereof.

FIGS. 2A and 2B show two exemplary configurations of positive displacement rotating members. The exemplary chamber 200 of FIG. 2A includes an upper lobed rotating member 205 and a lower lobed rotating member 210, an upper shaft 215, a lower shaft 220, a first port 225, and a second port 230. The rotating members 205-210 have an hourglass (e.g., figure eight) shape. The rotating member 205 is mounted on the upper shaft 215, and the rotating member 210 is mounted on the lower shaft 220. The shafts 215-220 are substantially parallel. In operation, the rotating members 205-210 rotate in opposite directions. In the illustrated example, the upper lobed rotating member 205 rotates in a clockwise direction while the lower lobed rotating member 210 rotates in a counterclockwise direction. As the rotating members 205-210 pass the first port 225 (as shown in view "a"), the rotating members 205-210 trap a finite volume of fluid 235 and transport it around the chamber 200 (as seen in views "b" and "c") to the second port 230, where the fluid 235 is discharged (shown in view "d"). In some implementations in which the rotating members 205-210 are rotated at a substantially constant speed, the displaced volume of fluid may be substantially independent of various conditions (e.g., line pressure, temperature, barometric pressure). In some embodiments, timing gears may control positions of the rotors 215-210 with respect to each other.

In some implementations, the rotating members 205-210 may be rotated to transport fluid from the first port 225 to the second port 230. In some implementations, the rotating members 205-210 may rotate in response to the fluid flow (e.g., freewheeling). In some implementations, the rotating members 205-210 may be held stationary. For example, a brake may be applied to the rotating members 205-210 that may prevent rotary motion. In some examples, the rotating members 205-210 may be held stationary to stop fluid flow. In some implementations, the direction of rotation of the rotating members 205-210 may be reversed to cause a reverse flow of fluid through the chamber 200. In some implementations, a negative torque may be applied to the rotating members 205-210 to reverse the fluid flow. For example, if the upper lobed rotating member 205 is rotated in a counter-clockwise direction and the lower lobed rotating member 210 is rotated in a clockwise direction, fluid may flow from the second port 230 to the first port 225. Examples involving increasing (e.g., speeding up flow rate and/or increasing pressure), decreasing (e.g., slowing down flow rate and/or reducing pressure), stopping, and/or reversing fluid flow are further described with reference to FIG. 3.

FIG. 2B depicts an exemplary chamber 250 that includes an upper three-lobed rotating member 255, a lower three-lobed rotating member 260, a first port 265, and a second port 270. The rotating members 255-260 are mounted on substantially parallel shafts and in operation the rotating members 255-260 rotate in opposite directions. View (a) depicts a fluid flowing in from the first port 265 and being trapped by the pair of three-lobed rotating members 255-260. A trapped volume of fluid 275 is transported around the chamber (views "b" and "c") and is discharged at the second port 270 (view "d").

While the configurations illustrated in FIGS. 2A and 2B depict examples of two rotating members, the number of rotating members is not limited to two. In some embodiments, fluid flow meters may include two, three, four, or more positive displacement rotating members. In some embodiments, positive displacement rotating members may include two, three, or more lobes. For example, the positive displacement rotating members (e.g., the rotating members 205-210) may take the form of toothed gears, and the chamber 200 may take the form of a gear pump. In some embodiments, various numbers of rotating members and various numbers of lobes per rotating member may be combined to form other forms of positive displacement devices that may boost, reduce, stop, and/or reverse fluid flow.

FIG. 3 shows a plot of exemplary fluid flow operating points with respect to fluid flow through a positive displacement chamber, such as the fluid flow metering and control system 100. In some examples, a torque applied to a set of positive displacement rotating members (e.g., the rotating members 130 of FIG. 1) may cause a substantially proportional rotational velocity of the rotating member and a correspondingly proportional fluid flow rate. In some examples, a base fluid flow rate may impart a rotational velocity upon the rotating members. The horizontal axis of the graph (labeled by the symbol "tau") represents a range of positive and negative torques that the actuator may impart to the positive displacement rotating members. The vertical axis of the graph (labeled by the symbol "omega") represents a range of positive and negative rotational velocities for the positive displacement rotating members.

The four quadrants of the graph (I, II, III, and IV) represent four operational modes in which the rotating members may operate. For example, quadrant I represents a range of negative torque and positive rotational velocity values. In some examples, quadrant I may represent braking (e.g., resisting, reducing) a positive (e.g., forward) fluid flow in a first direction. Quadrant II represents a range of positive torque and positive rotational velocity values. In some examples, quadrant II may represent boosting (e.g., pumping, pressurizing) a fluid flow in a forward direction. Quadrant III represents a range of positive torque and negative rotational velocity values. As such, quadrant III may represent braking a negative (e.g., reverse) fluid flow. Quadrant IV represents a range of negative torque and rotational velocity values. In some examples, quadrant IV may represent pumping a fluid flow in a reverse direction (e.g., opposite the base fluid flow direction).

Three diagonal traces 305, 310, 315 illustrate three examples of relationships that may exist between torque, velocity, and base fluid flows. The trace 305 represents an exemplary relationship between torque and rotational velocity where the base fluid flow rate is substantially static. For example, with a static base fluid flow and zero torque being applied to the rotating member, the rotational velocity of the rotating member may be substantially zero. When a positive torque is applied to the rotating member, a substantially proportional positive rotational velocity and positive fluid flow rate (illustrated by a point 325) may occur. When a negative torque is applied to the rotating member, a substantially proportional negative rotational velocity and negative fluid flow rate (illustrated by a point 330) may occur.

In some examples, the fluid may have a positive base fluid flow rate. This may cause a positive offset of the relationship between torque and rotational velocity, as illustrated by the trace 310. For example, when no torque is applied to the rotating member, the positive fluid flow may cause the rotating member to rotate at a proportional rotational velocity. When no torque is developed at the rotating member in a positive base fluid flow (illustrated by a point 335), the rotating member may not substantially affect the rate of fluid flow (for example, the rotating member may be considered to be "freewheeling"). If a positive torque is applied to the rotating member, the positive base fluid flow is boosted. If a negative torque is applied, the positive fluid flow is reduced but continues to flow in a forward direction (as illustrated by a point 340). In some implementations, a negative torque may be developed that may be sufficient to stop the rotation of the rotating member (illustrated by a point 345). At the point 345, the positive fluid flow may be substantially stopped. If an even greater negative torque is applied, the rotating member may respond by rotating at a proportionally negative rotational velocity. The negative rotational velocity may cause the fluid to be pumped in a reverse direction.

In some examples, the fluid may have a negative base fluid flow rate (illustrated by the trace 315). This may cause a negative offset of the relationship between torque and rotational velocity. For example, when no torque is applied to the rotating member, the negative base fluid flow may cause the rotating member to rotate at a proportional negative rotational velocity. When no torque is developed at the rotating member in a negative base fluid flow (illustrated by a point 350), the rotating member may freewheel in a negative direction. If a negative torque is applied to the rotating member, the negative fluid flow may be boosted in the reverse direction (e.g., in Quadrant IV). If a relatively moderate positive torque is applied to the rotating member, the negative rotational velocity of the rotating member may be reduced (as illustrated by a point 355) and may cause the negative fluid flow to be resisted. In some examples, a positive torque may be applied to the rotating member that may be sufficient to cause zero rotational velocity (illustrated by a point 360) and substantially stop the fluid flow. If a greater positive torque is applied, a positive rotational velocity may be developed in the rotating member (e.g., in Quadrant II). In some examples, this may cause a fluid with a negative base fluid flow rate to be pumped in a forward direction.

In some embodiments, the rotating members 130 and the controllable actuator 135 may both be located in the fluid flow. In some other embodiments, a fluid flowing through a fluid line (e.g., the fluid line 105) may have properties that may require the fluid to be kept isolated from components (e.g., the controllable actuator 135) of the fluid flow monitoring and control system (e.g., the system 100). For example, the fluid line may transport a flammable gas or liquid in an implementation where an electric actuator (e.g., the actuator 135) is used to control the rotational velocity of the rotating members (e.g., the rotating members 130). In an example where the electric actuator may be exposed to the flammable fluid flow, a spark may cause a fire or explosion. In another example, the actuator may be coupled to the rotating members by a shaft that passes through a wall of the fluid line. A caustic substance that may be flowing through the fluid flow line may erode seals and/or bearings at the location where the shaft passes though the fluid line wall. In some examples, this may cause a leak or contamination of the fluid.

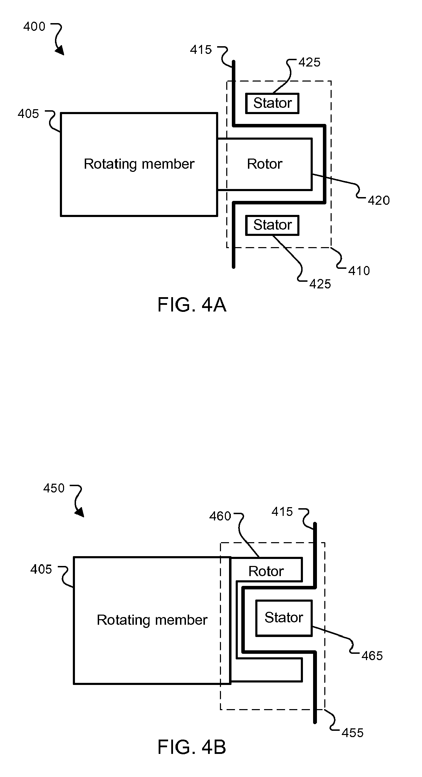

In some embodiments, the rotating members may be magnetically coupled to the actuator through the wall of the fluid line. FIGS. 4A and 4B show two exemplary magnetically coupled assemblies which separate magnetically coupled rotating members and actuators in a fluid flow metering and control system (e.g., the fluid flow metering and control system 100). FIG. 4A illustrates an exemplary magnetically coupled assembly 400 that includes a positive displacement rotating member 405, a controllable actuator 410, and a fluid line wall 415. In some examples, the fluid line wall 415 may be made of a substantially non-magnetic material. In some examples, the controllable actuator 410 may be an electric motor. The controllable actuator 410 includes a rotor 420 and a stator 425. The stator 425 at least partially surrounds the periphery of the rotor 420. The rotor 420 is coupled to the rotating member 405. In some embodiments, the rotor 420 may be coupled directly to the rotating member 405, while in some other embodiments the rotor 420 may be coupled to the rotating member 405 by a shaft or other coupling member.

The fluid line wall 415 passes between the stator 425 and the rotor 420, and in some examples, this configuration may separate a fluid in a fluid line from other various components in the fluid flow metering and control system. In some embodiments, the rotor 420 may include one or more magnets, and in some embodiments, the stator 425 may be able to cause a variable magnetic force upon the rotor 420. For example, the magnetic fields of the stator 425 and the rotor 420 may pass through the fluid line wall 415 to couple magnetically the rotor 420 and the stator 425. For example, the stator 425 may include one or more magnets.

The rotor and/or stator may have various configurations of teeth and gaps to improve performance. Given flux intensity (e.g., due to permanent magnet, electromagnet, windings, or a combination of these or other sources), various overlapping teeth, tooth depths, tooth profiles (e.g., trapezoidal, square, and the like) may be designed to optimize flux density, with or without substantial saturation, for example, over expected speed/torque conditions.

The kinetic energy of a fluid flow may cause the rotating member 405 and the rotor 420 to rotate, and the magnetic fields of the rotor 420 and the stator 425 may pass through the fluid line wall 415 to form a magnetic brake (e.g., a hysteresis brake) that may resist the fluid flow. In some embodiments, the stator 425 implemented as a magnetic brake may be constructed as to allow the brake effect to be controllable. For example, the stator 425 may be movable in a radial direction from the axis of rotation to increase the distance between the rotor 420 and stator 425. Increasing the distance may cause a proportional decrease in the braking effect of the magnetic brake. In other examples, the stator may be movable in a direction that is parallel to the axis of rotation. A magnetic brake may provide substantially maximum braking force when the stator 425 substantially radially centered around the rotor 420, and the braking force may be reduced by moving the stator 425 away from the radial center of the rotor 420 along the axis of rotation of the rotor 420.

In some embodiments, the stator 425 may be constructed as an electromagnet. For example, a controlled electric current may be flowed through the windings of the stator 425 to form a proportionally strong magnetic field. A variable magnetic field may be used to develop a controllable braking torque in the rotor 420.

In some embodiments, the stator 425 may be constructed of magnetic material (e.g., steel) to form an eddy brake. For example, a rotation of the rotor 420 may move magnetic fields across a steel stator. As the magnetic fields pass across the steel rotor, the electrical eddy currents are induced in the steel. The eddy currents cause heat in the steel, and in this manner, the kinetic energy of the fluid may be resisted by converting the kinetic energy to heat in the eddy brake.

In other various exemplary embodiments, the controllable actuator 410 may be constructed as an electric motor (e.g., brushless DC machine, stepper motor, reluctance machine, induction machine, and the like). For example, the stator 425 may create a rotating magnetic field that may induce the rotor 420 to rotate. By varying the speed and direction of the rotating field, the fluid flow may be controllably boosted, reduced, stopped, and/or reversed.

In some embodiments, the rotor 420 and the stator 425 may be configured as a generator. For example, the rotor 420 may create a rotating magnetic field that may induce a current in winding of the stator 425. In some examples, the current may be passed through a resistive electrical load to convert the electrical energy to heat. In some other examples, the current may be used to charge an electrical storage device (e.g., battery, capacitor) or used for power (e.g., to power components of the fluid flow metering and control system, or external devices). The electrical load may be varied to alter the amount of resistance that the rotor 420 may impart upon the rotating member 405.

FIG. 4B shows an exemplary magnetically coupled assembly 450 that includes the rotating member 405, a controllable actuator 455, and the fluid line wall 415. The controllable actuator 455 includes a rotor 460 and a stator 465. The rotor 460 substantially surrounds the stator 465, and the rotor 460 and stator 465 are separated by the fluid line wall 415. In some examples, this configuration may separate a fluid in a fluid line from other various components in the fluid flow metering and control system. In some embodiments, the rotor 460 may include one or more permanent magnets, and in some embodiments, the stator 465 may be able to cause a variable magnetic force upon the rotor 460. Various embodiments of magnetically coupled rotors and stators described in reference to FIG. 4A may also be adapted to the assembly 400.

In some embodiments, magnetic fields created by a stator (e.g., the stator 425, the stator 465) may be guided from the stator to the vicinity of a rotor (e.g., the rotor 420, the rotor 465) by magnetic conductors. For example, a magnetically coupled assembly may be constructed in a manner such that the rotor and stator may not substantially interact. In the described example, a high magnetic permeability material (e.g., steel, ferrite, or other magnetic material) magnetic conductor may guide and/or substantially focus a magnetic field at one or more locations between the stator and rotor. In this manner, the magnetic fields of the rotor and the stator may interact in an efficient manner to produce torque.

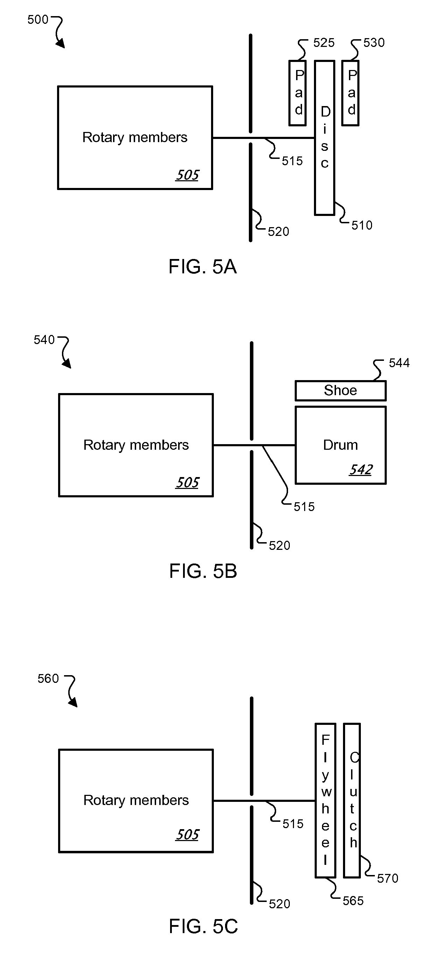

In some embodiments, a fluid flow metering and control system (e.g., the fluid flow metering and control system 100) may be configured to reduce a fluid flow by friction. FIGS. 5A-5C show three exemplary assemblies of friction brakes in a fluid flow metering and control system. FIG. 5A shows a fluid flow disc brake 500. The brake 500 includes a set of positive displacement rotating members 505 rotatably coupled to a brake disc 510 by a shaft 515. The shaft 515 passes through a fluid line wall 520. The brake 500 includes a pair of brake pads 525 and 530. In some embodiments, one, two, or more brake pads may be brought into contact with one or both sides of the brake disc 510. In some implementations, a fluid flow may cause the rotating members 505 and the brake disc 510 to rotate substantially freely. In operation, the brake pads 525 and 530 may be brought into contact with the disc 510 to resist the rotation of the disc. In some implementations, the amount of pressure applied between the brake pads 525-530 and the brake disc 510 may be varied to reduce the fluid flow rate in a substantially controllable manner. In some implementations, a pressure may be applied between the brake pads 525-530 and the brake disc that may hold the brake disc 510 and the rotating members 505 substantially stationary, and this may substantially stop the fluid flow.

FIG. 5B shows a fluid flow drum brake 540. The brake 540 includes the rotating members 505, the shaft 515, the fluid line wall 520, a brake drum 542, and a brake shoe 544. In operation, the rotation of the rotating members 505 causes the brake drum 542 to rotate. In some implementations, the brake shoe may be controllably brought into contact with the brake drum 542. For example, by varying the amount of pressure applied by the brake show 544 to the brake drum 542, the fluid flow rate may be reduced or substantially stopped.

FIG. 5C shows a fluid flow clutch brake 560. The brake 560 includes the rotating members 505, the shaft 515, the fluid line wall 520, a flywheel 565, and a clutch plate 570. In operation, the rotation of the rotating members 505 causes the flywheel 565 to rotate. In some implementations, the clutch plate 570 may be controllably brought into contact with the flywheel 565. For example, by varying the amount of pressure applied by the clutch plate 570 to the flywheel 565, the fluid flow rate may be reduced or substantially stopped.

Although exemplary fluid flow measurement and control system implementations have been described, other implementations may be deployed in various remote, industrial, commercial, and/or residential fluid flow measurement applications.

For example, mechanical friction may be controlled using controlled pneumatic, hydraulic, electromagnetic, or a combination of these or other actuation techniques, such as spring and/or lever bias. One or more gears, chains, belts, and/or gear boxes may be used, for example to couple the actuator 135 to the rotary member 130, or to couple a prime mover, such as an electric machine or combustion engine to drive, for example, the stator 425. Gear ratios may be used, for example, to provide appropriately matched speed and torque ranges.

Some embodiments, such as the system 100, for example, may communicate with other local and/or remote fluid control elements. For example, the system 100 may transmit measurement information (e.g., line pressure changes fast enough to fall outside a predetermined pressure-time profile or envelope) to intelligent valve or pump controllers. It may also transmit status and/or warning or error information, based on predetermined and/or user specified conditions. Similarly, the system 100, for example, may be able to receive, process, and implement external status and/or command signals (e.g., in infrared) from other sensor devices, an operator, or a master controller, for example.

Data stored in a data store of the fluid flow measurement and control system may be read, updated, deleted, or modified, for example, by external devices. For example, stored data may be accessed by a technician's diagnostic tool, or a remote base (e.g., via radio modem, cellular uplink, modem, internet connection). Some embodiments may use the display 190 to inform and/or interact with a user or technician to display collected data, configuration, and/or status information. For example, a display device may indicate whether a target energy capture rate is currently being met, which may aid in the installation, configuration, or troubleshooting of the fluid flow measurement system.

In various embodiments, the processing system 115 may communicate using suitable communication methods, equipment, and techniques. For example, the processing system 115 may communicate with a portable computer using point-to-point communication in which a message is transported directly from the source to the receiver over a dedicated physical link (e.g., fiber optic link, point-to-point wiring, and daisy chain). Other embodiments may transport messages by broadcasting to all or substantially all devices that are coupled together by a communication network, for example, by using omni-directional radio frequency (RF) signals, while still other embodiments may transport messages characterized by high directivity, such as RF signals transmitted using directional (i.e., narrow beam) antennas or infrared signals that may optionally be used with focusing optics. Still other embodiments are possible using appropriate interfaces and protocols such as, by way of example and not intended to be limiting, RS-232, RS-422, RS-485, 802.11 a/b/g, Wi-Fi, Ethernet, IrDA, FDDI (fiber distributed data interface), token-ring networks, or multiplexing techniques based on frequency, time, or code division. Some implementations may optionally incorporate features such as error checking and correction (ECC) for data integrity, or security measures, such as encryption (e.g., WEP) and password protection.

In some embodiments, external energy inputs may be received, for example, to supply energy to the power supply 195 and/or to re-charge batteries. Some embodiments may operate with other DC voltage sources, such as 9V (nominal) batteries, for example. Alternating current (AC) inputs, which may be provided, for example from a 50/60 Hz power port, or from a portable electric generator, may be received via a rectifier and appropriate scaling. Provision for AC (e.g., sine wave, square wave, triangular wave, substantially non-periodic, not necessarily regularly shaped, or the like) inputs may include a line frequency transformer to perform isolation, voltage step-up, or voltage step-down.

To substantially compensate for leakage around the rotating members (e.g., paddles) of a positive displacement meter, some embodiments may, in some modes, actively operate to pump fluids so as to substantially negate natural leakage through the meter from a higher pressure side to a lower pressure side. For example, to maintain a commanded flow rate (e.g., net zero flow, or a specified non-zero flow rate in a specified direction), additional actuation may be determined to compensate for leakage. The determined compensation may be estimated as a function of inlet line pressure, outlet line pressure, differential pressure across the meter, fluid temperature, flow rate, fluid composition and characteristics (e.g., small molecular size, such as hydrogen, compared to larger molecular size, such as methane), or a combination of these or other parameters that determine leakage. Accordingly, some embodiments may operate as a combination meter and valve capable of providing substantially zero net flow. In various embodiments, the compensation action may be indexed with pulsed incremental movements, or may include a substantially smooth rotation velocity.

Various embodiments may analyze feedback signals to detect changes in operating performance conditions. For example, sensors (e.g., Wiegand sensors, electro-magnet coils, Hall effect, proximity sensors, and the like) that can detect rotation of two different rotating members may be monitored to detect signals characteristic of friction, vibration, worn gears, and/or issues with tooth engagement. Furthermore, characteristic signals output by such sensors may be used to positively detect absolute and/or relative angular position (e.g., index) of such rotating members. In one example, worn gears may be identified, for example, by measuring small variations in timing (e.g., dither) among two or three signals associated with rotating members. Upon identifying signals that, after appropriate filtering and signal processing (e.g., FFT to analyze harmonics associated with vibrations, averaging, statistical analysis of timing differentials after accounting for average speed, and the like) some parameter may be out of an acceptable range (e.g., window or threshold), a notification message may be stored in a data store for subsequent retrieval, transmission, and/or display to service personnel. In some cases, the characteristic signal may be classified and associated with a predetermined condition, examples of which may include, but are not limited to, lubricate bearings, worn gear tooth on shaft #2, worn bearings, interference between paddle and chamber wall, excess leakage around a paddle in at a particular angular displacement, or a combination of these or similar performance conditions. In some cases, a maintenance code or request may be transmitted by wired, optical, wireless, audible, visual display, and/or other communication method to prompt service personnel to provide maintenance. In some cases, maintenance may be scheduled in advance of catastrophic failure of the meter to perform its base functions. For example, a notification message stored in a data store for subsequent retrieval, display, and/or transmission may further include a severity indication (e.g., amplitude, repetition rate, and data sufficient to establish a trend), and related parameter information (e.g., flow rate, line pressure, differential pressure, date and time information, temperature, supply voltage, and the like). Advantageously, some systems may communicate type and/or severity information, either in raw data form for external processing and analysis, or in summary form based on self-analysis performed by the meter system itself. Such notification message information capability may substantially reduce labor and cost requirements. For example, maintenance or service personnel may use transmitted notification messages to schedule maintenance or service with advance knowledge about parts, equipment, personnel and urgency of the necessary repair or servicing before traveling to the meter system installation.

In various examples, parameter monitoring may be performed using one or a combination of approaches. For example, some monitoring may include measurements responsive to the amplitude of a signal, which may be a function of the time-rate of change of flux that corresponds to the rotational speed of a rotating member, for example. In some other examples, a voltage level or a level of magnetic saturation may be detected (e.g., using current sense resistance, peak-follower circuits, analog-to-digital conversion, and the like). In still further examples, monitoring may involve various resources (e.g., frequency-to-voltage conversion, phase-locked loops, comparison to a reference time base, and the like) for monitoring changes in timing and/or frequency (e.g., dithering) over successive samples of one or more signals (e.g., pulses). Such example may provide enhanced measurement resolution of instantaneous and/or average estimates of flow direction, flow rate, flow acceleration, and/or time-rate of change of flow acceleration. Such monitoring approaches may advantageously improve measurement of total flow volume and/or improve control of a flow actuator device.

In various examples, a flow actuator device may be controlled by using one or a combination of approaches. By way of example, and not limitation, an exemplary control approach may include modulation of pulse width, frequency, amplitude, and/or density to apply a control signal to an actuator device. In an illustrative example with a 4-bit digital-to-analog conversion to generate a control signal for an actuator, an average resolution greater than 4-bits may be obtained in some circumstances by alternating between two adjacent levels (e.g., 1010 and 1011). For example, to generate an average voltage level that is approximately two-thirds of the way between 1010 and 1011, a controller may twice output a pulse amplitude corresponding to 1011 for each time it outputs pulse amplitude corresponding to 1010. Other embodiments may generate a substantially linear or smoothed signal, any may use a power amplifier to generate a suitable power signal level to match the load. In some examples, which are not intended to be limiting, a power amplifier may include a dc-to-dc switch mode power converter, which may be operated to control current and/or voltage applied to the actuator.

A number of embodiments have been described. Nevertheless, it will be understood that various modifications may be made. For example, advantageous results may be achieved if the steps of the disclosed techniques were performed in a different sequence, if components in the disclosed systems were combined in a different manner, or if the components were replaced or supplemented by other components. The functions and processes (including algorithms) may be performed in hardware, software, or a combination thereof. Accordingly, other embodiments are within the scope of the following claims.

The features of further embodiments of the invention are below disclosed.
Embodiment A: a fluid flow measurement device comprising: a fluid conduit structure comprising a first port and a second port in fluid communication through a chamber; a number, for instance two or more, rotating members in the chamber, each of the members having substantially parallel axes of rotation, wherein rotation of the rotating members positively displaces a fluid in the chamber between the first and second ports, wherein the rotating members are rotatable when driven by a fluid flowing between the first and second ports.
Embodiment B: the device of Embodiment A further comprising a meter to detect rotation of at least one of the rotating members and to determine therefrom a measurement of a volume of fluid communicated between the first and second ports.
Embodiment C: the device of any one of Embodiments A or B further comprising an actuator to automatically control rotation of the rotating members to manipulate a fluid flow through the meter in response to a control signal.
Embodiment D: the device of Embodiment C wherein the actuator is operable to increase a base fluid flow rate through the meter in response to the control signal.
Embodiment E: the device of Embodiment C wherein the actuator operates to substantially decrease a base fluid flow rate through the meter in response to the control signal.
Embodiment F: the device of Embodiment C wherein the actuator operates to substantially stop a base fluid flow rate through the meter in response to the control signal.
Embodiment G: the device of Embodiment C wherein the actuator operates to reverse a base fluid flow direction through the meter in response to the control signal.
Embodiment H: the device of any one of Embodiments from A to G wherein the control signal comprises an indication of a predetermined set of conditions associated with the fluid flow; for instance, the predetermined set of conditions may be associated with a line break upstream of the fluid conduit structure or the predetermined set of conditions may be associated with a line break downstream of the fluid conduit structure.
Embodiment I: the device of any one of Embodiments from A to H, wherein the actuator comprises a hysteresis brake or a magnetic reluctance brake.
Embodiment J: the device of any one of Embodiments from A to I further comprising a barrier member to separate a fluid in the chamber from at least a portion of the actuator.
Embodiment K: the device of any one of Embodiments from A to I further comprising a barrier member to separate a fluid in the chamber from at least a portion of the actuator wherein the actuator applies a torque to at least one of the rotating members by interacting with a magnetic flux that passes through the barrier member.
Embodiment L: the device of Embodiment J or K wherein a portion of the barrier member provides a preferential path to couple magnetic flux associated with the actuator.
Embodiment M: A fluid flow measurement method comprising providing a fluid conduit structure comprising a first port and a second port in fluid communication through a chamber; providing a number, for instance two or more, rotating members in the chamber, each of the members having substantially parallel axes of rotation, wherein rotation of the rotating members positively displaces a fluid in the chamber between the first and second ports, wherein the rotating members rotate in response to a fluid flowing between the first and second ports.
Embodiment N: The method of Embodiment M, further comprising detecting rotation of at least one of the rotating members and determining a measurement of a volume of fluid communicated between the first and second ports based upon the detected rotation.
Embodiment O: The method of Embodiment N further comprising automatically controlling rotation of the rotating members to manipulate a fluid flow between the first and second ports in response to a control signal.
Embodiment P: The method of Embodiment O further comprising generating the control signal based upon a comparison of at least one desired flow rate parameter value and at least one measured flow rate parameter value determined based upon the detected rotation.
Embodiment Q: The method of Embodiment P, wherein the desired flow rate parameter comprises a rate of fluid flow between the first and second ports, and/or the desired flow rate parameter comprises an acceleration of a fluid flow between the first and second ports, and/or the desired flow rate parameter comprises a time rate of change of an acceleration of a fluid flow between the first and second ports, and/or the desired flow rate parameter comprises a direction of fluid flow between the first and second ports.
Embodiment R: The method of any one of the Embodiments from O to Q, wherein controlling the rotation of the rotating members to manipulate the fluid flow between the first and second ports in response to a control signal comprises substantially compensating for leakage of the fluid around the rotating members.
Embodiment S: a computer program for a processing system, in particular for a programmable unit of a processing system, the processing system being coupled to a fluid flow measurement device comprising: a fluid conduit structure comprising a first port and a second port in fluid communication through a chamber; a number, for instance two or more, rotating members in the chamber, each of the members having substantially parallel axes of rotation, wherein rotation of the rotating members positively displaces a fluid in the chamber between the first and second ports, wherein the rotating members are rotatable when driven by a fluid flowing between the first and second ports,
   wherein the computer program, when executed by the programmable unit, programs the processing system to carry out one or more of the following functions:
   - receiving from a meter of the fluid flow measurement device a detection of a rotation of at least one of the rotating members, and determining therefrom a measurement of a volume of fluid communicated between the first and second ports.
   - manipulating a fluid flow through the meter in response to a control signal by acting on an actuator (which can be of any type described in above Embodiments from I to L) of the fluid flow measurement device controlling rotation of the rotating members.
Embodiment T: the program of Embodiment S wherein the computer program when executed by the programmable unit programs the processing system to control the actuator to execute at least one of the following functions:
   - increase a base fluid flow rate through the meter in response to the control signal,
   - substantially decrease a base fluid flow rate through the meter in response to the control signal;
   - substantially stop a base fluid flow rate through the meter in response to the control signal;
   - reverse a base fluid flow direction through the meter in response to the control signal.
Embodiment U: the program of any one of Embodiments S or T wherein the control signal comprises an indication of a predetermined set of conditions associated with the fluid flow; for instance, the predetermined set of conditions may be associated with a line break upstream of the fluid conduit structure or the predetermined set of conditions may be associated with a line break downstream of the fluid conduit structure.

## Claims

1. A fluid flow measurement device comprising:
a fluid conduit structure comprising a first port (116;225;265) and a second port (118; 230; 270) in fluid communication through a chamber (200; 250);
two or more rotating members (130; 205, 210; 255, 260) in the chamber, each of the members having substantially parallel axes of rotation, wherein rotation of the rotating members positively displaces a fluid in the chamber between the first and second ports, wherein the rotating members (130; 205, 210; 255, 260) are rotatable when driven by a fluid flowing between the first (116;225;265) and second ports (118; 230; 270);
a meter (110) to detect rotation of at least one of the rotating members (130; 205, 210; 255, 260) and to determine therefrom a measurement of a volume of fluid communicated between the first (116;225;265) and second ports (118; 230; 270); and
an actuator (135; 410; 455) to automatically control rotation of the rotating members (130; 205, 210; 255, 260) to manipulate a fluid flow through the meter in response to a control signal.

2. The device of claim 1, wherein the actuator (135; 410; 455) is operable to increase a base fluid flow rate through the meter in response to the control signal, or is operable to substantially decrease a base fluid flow rate through the meter in response to the control signal.

3. The device of claim 1, wherein the actuator (135; 410; 455) is operable to substantially stop a base fluid flow rate through the meter in response to the control signal.

4. The device of claim 1, wherein the actuator (135; 410; 455) operates to reverse a base fluid flow direction through the meter in response to the control signal.

5. The device of claim 1, wherein the control signal comprises an indication of a predetermined set of conditions associated with the fluid flow.

6. The device of claim 5, wherein the predetermined set of conditions is associated with a line break upstream of the fluid conduit structure and/or the predetermined set of conditions is associated with a line break downstream of the fluid conduit structure.

7. The device of claim 1, where in the actuator comprises a hysteresis brake (410) or a magnetic reluctance brake (410).

8. The device of claim 1, further comprising a barrier member to separate a fluid in the chamber from at least a portion of the actuator.

9. The device of claim 8, wherein the actuator applies a torque to at least one of the rotating members by interacting with a magnetic flux that passes through the barrier member.

10. The device of claim 8, wherein a portion of the barrier member provides a preferential path to couple magnetic flux associated with the actuator.

11. A fluid flow measurement method comprising:
providing a fluid conduit structure comprising a first port (116;225;265) and a second port (118; 230; 270) in fluid communication through a chamber (200; 250);
providing two or more rotating members (130; 205, 210; 255, 260) in the chamber (200; 250), each of the members having substantially parallel axes of rotation, wherein rotation of the rotating members positively displaces a fluid in the chamber between the first and second ports, wherein the rotating members (130; 205, 210; 255, 260) rotate in response to a fluid flowing between the first (116;225;265) and second ports (118; 230; 270);
detecting rotation of at least one of the rotating members (130; 205, 210; 255, 260);
determining a measurement of a volume of fluid communicated between the first (116;225;265) and second ports (118; 230; 270) based upon the detected rotation; and
automatically controlling rotation of the rotating members (130; 205, 210; 255, 260) to manipulate a fluid flow between the first (116;225;265) and second ports (118; 230; 270) in response to a control signal.

12. The method of claim 11, further comprising generating the control signal based upon a comparison of a desired flow rate parameter value and a measured flow rate parameter value determined based upon the detected rotation.

13. The method of claim 11 or 12, wherein:
the desired flow rate parameter comprises a rate of fluid flow between the first (116;225;265) and second ports (118; 230; 270), and/or
the desired flow rate parameter comprises an acceleration of a fluid flow between the first (116;225;265) and second ports (118; 230; 270), and/or
the desired flow rate parameter comprises a time rate of change of an acceleration of a fluid flow between the first (116;225;265) and second ports (118; 230; 270), and/or
the desired flow rate parameter comprises a direction of fluid flow between the first (116;225;265) and second ports (118; 230; 270).

14. The method of any one of claims 11 to 13, wherein controlling the rotation of the rotating members (130; 205, 210; 255, 260) to manipulate the fluid flow between the first (116;225;265) and second ports (118; 230; 270) in response to a control signal comprises substantially compensating for leakage of the fluid around the rotating members (130; 205, 210; 255, 260).
